# FASCICULE DE BREVET EUROPEEN

(11) **EP 0 472 459 B1**
(45) Date de publication et mention de la délivrance du brevet: **03.01.1996**
(21) Numéro de dépôt: 91402261.1
(22) Date de dépôt: 19.08.1991
(51) Int. Cl.: B65G 53/30

(54) **Procédé et installation de traitement d'agglomérats de particules solides en suspension dans un liquide, afin d'obtenir un mélange hétérogène pouvant circuler sans dépôts dans des canalisations de grande longueur**
Verfahren und Vorrichtung zur Behandlung von körnigen Agglomeraten in Suspension in einer Flüssigkeit, um ein heterogenes Gemisch zu bekommen, das ohne Ablagerung in Rohrleitungen gefördert werden kann
Process and apparatus for treating solid agglomerates, in suspension in a liquid, to ensure that a heterogeneous mixture can be conveyed in pipelines without deposits

(30) Priorité: 20.08.1990 FR 9010475
(43) Date de publication de la demande: 26.02.1992
(73) Titulaire: COGEMA COMPAGNIE GENERALE DES MATIERES NUCLEAIRES, F-78141 Velizy-Villacoublay (FR)
(72) Inventeur: Dollfus, Jacques, F-78690 Les Essarts le Roi (FR); Barbe, Alain, F-78310 Elancourt (FR)
(74) Mandataire: Poulin, Gérard

(56) Documents cités:
- FR-A- 2 006 254
- FR-A- 2 419 890
- GB-A- 2 111 038
- GB-A- 2 115 074
- US-A- 4 619 406

## Description

L'invention concerne un procédé de traitement d'agglomérats de particules solides en suspension dans un liquide, afin de les diviser et d'obtenir ainsi un mélange hétérogène pouvant circuler sans risque de dépôts dans des canalisations de grande longueur. Ce procédé s'applique notamment au retraitement des combustibles nucléaires irradiés, après la découpe de ces combustibles, leur dissolution dans une solution nitrique, puis leur décantation dans un clarificateur. L'invention concerne également une installation mettant en oeuvre ce procédé.

En particulier, lorsqu'il faut déplacer dans des canalisations de grande longueur des liquides contenant des particules solides, ces particules solides ont tendance à s'agglomérer entre elles et à former des amas dans les zones où les conditions d'un écoulement turbulent ne sont pas assurées. Ces amas, du fait de l'agglomération ont tendance à former des amas de masse volumique plus faible que celle des particules qui les composent. Les mécanismes d'agglomération sont mal connus mais les liaisons mises en jeu sont principalement de deux natures : des liaisons chimiques qui, lorsque ces liaisons sont rompues, ne se reforment pas rapidement et des liaisons du type Van Der Walls qui, lorsqu'elles sont rompues, peuvent se reformer rapidement.

Le procédé de traitement selon l'invention, permet de rompre ces liaisons en utilisant les caractéristiques des différents appareils qu'il utilise. Ce procédé s'applique en particulier au traitement des agglomérats de particules appelées "fines" dans le processus de retraitement des combustibles nucléaires irradiés.

Lors de leur retraitement, les combustibles nucléaires irradiés sont coupés, puis dissous dans des solutions nitriques chaudes. A l'issue de l'opération de dissolution, on obtient des produits solides appelés coques, constitués par des morceaux de gaine des combustibles, et des solutions nitriques contenant des agglomérats de particules solides de granulométrie faible, appelées "fines". Ces particules solides sont à base de zirconium, de molybdène, de ruthénium et d'autres métaux issus de la structure des combustibles.

Avant d'être envoyées vers des colonnes d'extraction du solvant, les solutions nitriques de dissolution sont décantées dans un clarificateur constitué, par exemple, par une décanteuse pendulaire centrifuge. Ce clarificateur permet de séparer les solutions nitriques claires, destinées à être acheminées vers les colonnes d'extraction, des fines qui se présentent alors sous forme de boues ou de solutions plus ou moins épaisses ou plus ou moins agglomérées.

Compte tenu de leur très forte radioactivité, les fines doivent être incluses dans une matrice de verre avec les produits de fission issues des extractions. Pour cela, elles sont transférées depuis le clarificateur jusqu'au site de vitrification par des tuyauteries de transfert. Sur le site de vitrification, ces tuyauteries débouchent dans des cuves de stockage dans lesquelles les solutions de fines sont constamment agitées, pour des raisons de sûreté nucléaire, par exemple au moyen de pulseurs.

Une telle installation présente différents inconvénients.

En premier lieu, les fines sont des particules abrasives qui usent d'autant plus les tuyauteries, notamment dans leurs parties courbes, que la taille des particules est importante.

Par ailleurs, lorsque les fines sont formées de particules fortement agglomérées, elles ont tendance à se déposer dans les tuyauteries, notamment dans les zones non turbulentes ou lorsqu'il existe des aspérités de surface. Au bout d'un certain temps, il se crée donc des bouchons qui s'arrêtent dans les parti es incurvées des tuyauteries. Cela constitue un problème d'autant plus délicat à résoudre que le débouchage des tuyauteries nécessite d'intervenir dans des cellules dans lesquelles l'accès de l'homme est rigoureusement interdit. De plus, compte tenu des difficultés de modélisation du comportement des fines, il est très difficile de modifier avec succès les installations et les paramètres tels que le débit, les pertes de charge dans les tuyauteries, etc. afin d'éviter la formation de tels bouchons.

Par ailleurs, la présence d'agglomérats dans les solutions de fines a aussi tendance à entraîner un dépôt de ces agglomérats dans le fond des cuves de stockage qui se trouvent sur le site de vitrification. Le fonctionnement des pulseurs assurant l'agitation des solutions de fines s'en trouve perturbé, ce qui constitue là encore un inconvénient notable, compte tenu des difficultés d'intervention à l'intérieur des cuves.

Dans le document GB-A-2 111 038, qui concerne la préparation d'un matériau céramique à partir de matériaux en grains, il est proposé d'introduire ces matériaux en grains, ainsi que de l'eau, dans un moulin, afin de réduire la taille des grains. La boue issue du moulin est déversée dans un réservoir, où elle est reprise par une pompe qui la refoule dans un séparateur. La fraction de la boue dont la granulométrie correspond à celle de la poudre à obtenir est transférée directement dans un système de stockage et d'homogénéisation. La fraction restante de la boue est recyclée dans le moulin.

L'invention a précisément pour objet un procédé et une installation permettant de traiter de façon simple des agglomérats de particules solides en suspension dans un liquide, telles que les fines de dissolution obtenues lors du retraitement des combustibles nucléaires irradiés, pour désagréger les agglomérats avant que ces particules ne circulent dans des canalisations de grande longueur, par exemple afin d'être transférées vers le site de vitrification, en utilisant des moyens techniques aisés à mettre en oeuvre et aptes à être montés et démontés à distance à l'aide de télémanipulateurs lorsqu'une intervention est nécessaire.

Selon l'invention, ce résultat est obtenu au moyen d'un procédé selon la revendication 1.

L'invention s'applique avantageusement au traitement des fines obtenues après découpe, dissolution et décantation des combustibles nucléaires irradiés, avant leur transfert dans la cuve de stockage.

Selon différents modes de réalisation de l'invention, on peut désagréger les agglomérats à l'intérieur de la boucle en utilisant des moyens ultrasonores, ou un dispositif à tube de venturi éventuellement suivi d'un système de chicanes.

De plus, on procède de préférence au tamisage des particules dans un tamiseur à ultrasons.

Selon un autre aspect de l'invention, il est également proposé une installation selon la revendication 7.

On décrira maintenant, à titre d'exemples non limitatifs, différents modes de réalisation de l'invention, en se référant aux dessins annexés, dans lesquels :
- la figure 1 représente de façon schématique l'ensemble d'une installation de traitement des fines de dissolution réalisée conformément à l'invention ;
- la figure 2 est une vue en coupe schématique qui représente un dispositif ultrasonore placé, conformément à un premier mode de réalisation de l'invention, dans la boucle de l'installation illustrée sur la figure 1 ;
- la figure 3 est une vue en coupe schématique comparable à la figure 2 représentant un dispositif à tube de venturi placé, selon un deuxième mode de réalisation de l'invention, dans la boucle de l'installation illustrée sur la figure 1 ;
- la figure 4 est une vue en coupe schématique comparable aux figures 2 et 3 représentant un dispositif à tube de venturi placé selon un troisième mode de réalisation de l'invention, dans la boucle de l'installation illustrée sur la figure 1 ;
- la figure 5 est une vue en coupe schématique comparable aux figures 2 à 4 représentant un dispositif à tube de venturi et à chicanes conçu pour être placé, selon un quatrième mode de réalisation de l'invention, dans la boucle de l'installation illustrée sur la figure 1 ; et
- la figure 6 est une vue en coupe schématique représentant un tamiseur de fines à ultrasons apte à être utilisé dans l'installation illustrée sur la figure 1.

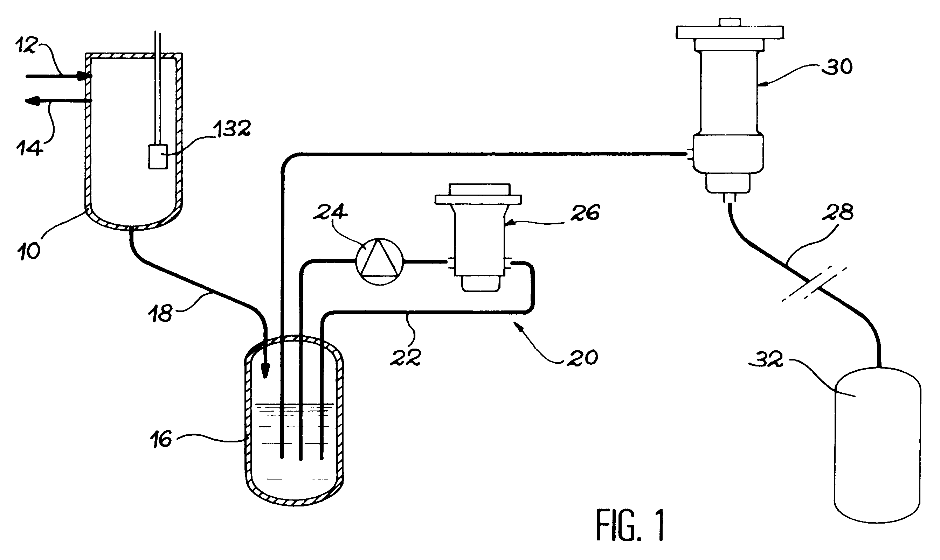

L'installation de traitement des fines de dissolution conforme à l'invention va à présent être décrite en se référant tout d'abord à la figure 1.

Sur cette figure, la référence 10 désigne un clarificateur, constitué par exemple par une décanteuse pendulaire centrifuge. A l'intérieur de ce clarificateur 10, on procède de façon classique à la décantation des solutions nitriques issues d'un appareil de dissolution (non représenté), dans lequel les combustibles nucléaires irradiés ont été préalablement dissous dans des solutions nitriques chaudes, après avoir été tronçonnés. Ces solutions nitriques sont introduites dans le clarificateur 10 par une tuyauterie 12.

Dans le clarificateur 10, les solutions nitriques claires, destinées à être envoyées vers des colonnes d'extraction du solvant (non représentées) par une canalisation 14, sont séparées des fines de dissolution. Lorsque le clarificateur est constitué par une décanteuse pendulaire centrifuge, les fines se retrouvent dans le fond de cette dernière sous une forme agglomérée et forment un gâteau. Leur transfert vers le site de vitrification est alors permis par des rampes de rinçage (non représentées) installées dans la décanteuse et qui permettent de casser le gâteau. Les fines se présentent alors sous la forme de boues ou de solutions plus ou moins épaisses et plus ou moins agglomérées dans le fond de la décanteuse.

Ces boues de fines sont ensuite collectées dans une cuve de transfert 16 par une tuyauterie de liaison 18. Afin d'éviter tout risque de bouchage de cette dernière, la cuve de transfert 16 est placée, de préférence, immédiatement en dessous du clarificateur 10, l'écoulement des fines s'effectuant par gravité dans la tuyauterie 18, dont la longueur est aussi faible que possible.

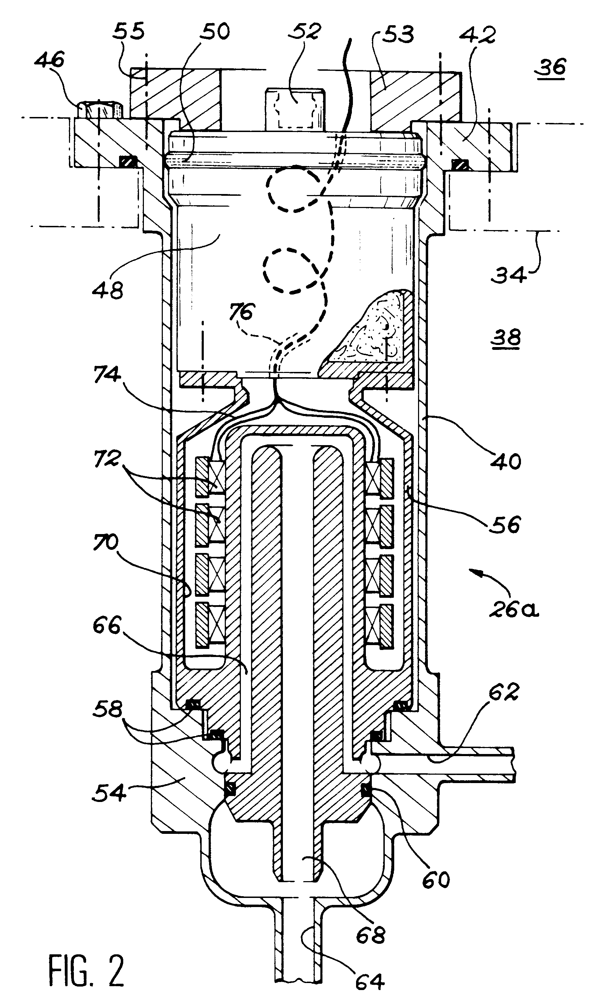

La cuve de transfert 16 fait partie d'une boucle 20 de dilacération en continu des boues de fines collectées dans cette cuve. Cette boucle 20 comporte une canalisation 22 dans laquelle sont placés, en plus de la cuve de transfert 16, une pompe 24 et un dispositif dilacérateur 26 permettant de désagréger les agglomérats de fines. La pompe 24 peut notamment être réalisée conformément aux enseignements du document FR-A-2 361 558. Différents modes de réalisation du dispositif dilacérateur 26 seront décrits par la suite en se référant aux figures 2 à 5.

La boucle 20 de dilacération constitue un circuit fermé qui permet, grâce à la pompe 24, de recycler continuellement les boues de fines dans le dispositif dilacérateur 26, jusqu'à l'obtention de la granulométrie moyenne souhaitée.

Lors du premier passage des boues de fines dans la boucle 20, l'effet de désagrégation des agglomérats obtenu par le dispositif dilacérateur 26 est pratiquement doublé par un effet comparable obtenu dans la pompe 24, du fait de l'aspiration et de l'agitation due à la rotation des boues. Le nombre de cycles est déterminé par l'utilisateur en fonction des caractéristiques initiales des boues de fines traitées et des caractéristiques que l'on désire obtenir avant de transférer ces boues vers le site de vitrification. Une vitesse minimale de circulation des boues dans la boucle 20 doit cependant être respectée, afin d'éviter une sédimentation des boues dans le dispositif dilacérateur 26 ou dans le reste de la boucle.

La pompe 24 assurant la circulation des boues de fines dans la boucle 24 peut être actionnée en permanence, quelle que soit la quantité de boues présente dans la cuve de transfert 16. Cependant, il est préférable de stocker les solutions de fines dans la cuve de transfert 16 pour ne mettre la pompe 24 en fonctionnement que lorsque la cuve est suffisamment pleine.

Lorsque les boues de fines présentes dans la cuve de stockage 16 ont une granulométrie moyenne inférieure à un seuil déterminé, qui correspond par exemple au seuil de bouchage des canalisations de transfert vers le site de vitrification, ce transfert est réalisé. La connaissance du franchissement de ce seuil peut être obtenue soit en contrôlant la granulométrie des boues, soit en déduisant cette granulométrie du nombre de cycles effectués dans la boucle 20, soit encore à l'aide de ces deux informations cumulées.

Le transfert des boues de fines vers le site de vitrification s'effectue par une tuyauterie 28 dans laquelle est placé, à proximité immédiate de la cuve de transfert 16, un tamiseur de fines 30. L'extrémité de la tuyauterie 28 opposée à la cuve de transfert 16 débouche sur le site de vitrification dans une cuve de stockage 32, équipée de façon classique de moyens d'agitation tels que des pulseurs (non représentés), pour des raisons de sûreté nucléaire.

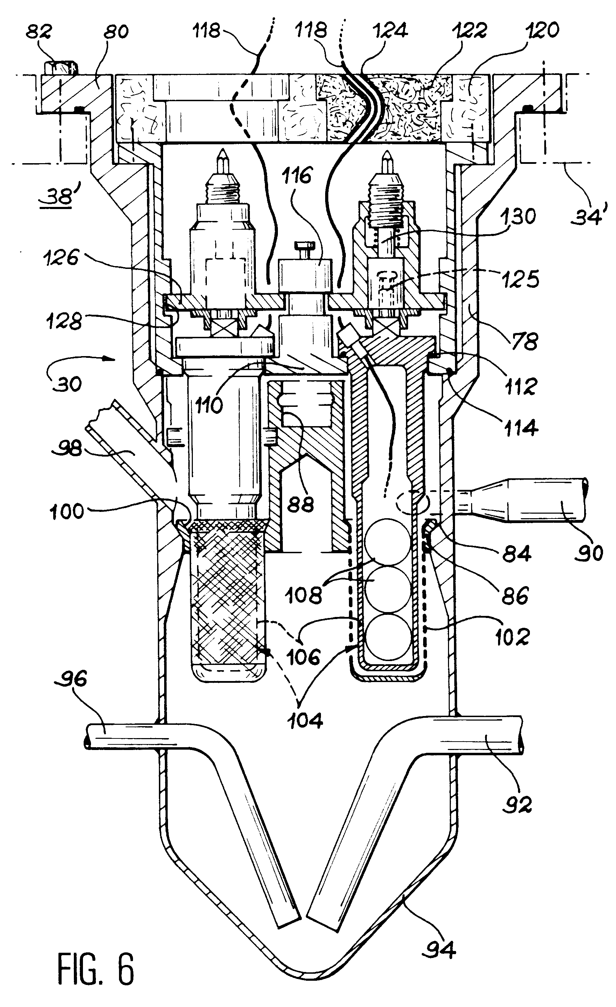

Le tamiseur de fines 30 placé à l'entrée de la tuyauterie de transfert 28 sera décrit en détail par la suite en se référant à la figure 6. Il a pour fonction de retenir les fines dont la granulométrie dépasse un seuil maximum admissible dans la tuyauterie de transfert 28 et de procéder à une désagrégation finale des agglomérats. Il est également équipé de moyens de décolmatage.

Les solutions de fines calibrées sortant du tamiseur de fines 30 peuvent donc transiter sans difficulté dans la tuyauterie de transfert 28, jusqu'à la cuve de stockage 32 collectant les solutions de fines à vitrifier. En particulier, tous risques de bouchage de la tuyauterie 28 ou de mauvais fonctionnement des pulseurs équipant la cuve de stockage 32 sont évités.

En se référant à la figure 2, on décrira à présent un premier mode de réalisation du dispositif dilacérateur 26, dans lequel la désagrégation des agglomérats est obtenue par effet de cavitation au moyen d'ondes ultrasonores. Sur la figure 2, ce dispositif est désigné de façon générale par la référence 26a.

Le dispositif dilacérateur à ultrasons 26a est suspendu à une dalle de béton horizontale 34 qui sépare une zone supérieure 36, accessible à l'homme, d'une cellule inférieure 38 dans laquelle se trouvent les dispositifs de traitement et de transfert des solutions radioactives. En étant suspendu à la dalle 34, le dispositif 26a est donc placé dans la cellule 38.

Le dispositif dilacérateur à ultrasons 26a comporte une cuve cylindrique 40, d'axe vertical, munie à son extrémité supérieure d'une bride 42 qui repose sur la dalle 34 et en est solidarisée de façon étanche, par exemple par des vis 46.

La cuve 40 est fermée à son extrémité supérieure par un bouchon 48 qui assure au-dessus du dispositif 26a la continuité de la protection biologique assurée par la dalle 34. Au moins un joint d'étanchéité 50 porté par le bouchon 48 assure l'étanchéité entre ce dernier et la partie supérieure de la cuve 40, tout en autorisant l'enlèvement et la mise en place du bouchon 48 à l'aide d'un organe de préhension 52 placé sur la face supérieure du bouchon et apte à être saisi par des moyens de manutention à distance placés dans la zone accessible 36.

Une couronne 53 placée au-dessus du bouchon 48, maintient en position l'ensemble constitué par le bouchon 48 et le corps 56 à l'aide, par exemple, de vis 55, en prise sur la bride 42.

A proximité de son extrémité inférieure, la cuve 40 présente une partie 54 de plus forte épaisseur, dont la face supérieure en gradin sert d'appui au corps 56 de la partie active du dispositif 26a, ce corps 56 étant fixé, par exemple par des vis, sur la face inférieure du bouchon 48. Des joints d'étanchéité 58 portés par le corps 56 viennent alors en appui sur la face supérieure en gradin de la partie 54 de la cuve 40, alors qu'un joint d'étanchéité 60 porté par une partie inférieure cylindrique du corps 56 vient en contact étanche avec la surface intérieure cylindrique de la partie 54 de la cuve 40.

Un passage d'admission 62 traverse radialement la partie 54 de plus forte épaisseur de la cuve 40 et débouche entre les joints 58 et 60. De plus, un passage d'évacuation 64 est formé dans le fond de la cuve 40, selon l'axe vertical de cette dernière.

Le corps 56 de la partie active du dispositif 26a, qui est monté coaxialement à l'intérieur de la cuve 40, de façon à pouvoir en être extrait et y être mis en place avec le bouchon 48, comporte un passage intérieur par lequel s'écoulent les solutions à traiter, depuis le passage d'admission 62 jusqu'au passage d'évacuation 64. Ce passage formé à l'intérieur du corps 56 comprend une partie annulaire extérieure 66 dont l'extrémité inférieure débouche en face du passage d'admission 62 et une partie centrale 68 dont l'extrémité supérieure communique avec l'extrémité supérieure de la partie annulaire 66 et dont l'extrémité inférieure débouche en face du passage d'évacuation 64. Ces parties annulaire 66 et centrale 68 sont disposées coaxialement selon l'axe vertical de la cuve 40.

Les solutions admises dans le dispositif 26a circulent ainsi tout d'abord de bas en haut dans la partie annulaire 66, puis de haut en bas dans la partie centrale 68 du passage formé dans le corps 56. Il est à noter que les passages 62 et 64 peuvent être inversés, de sorte que la circulation des solutions à traiter s'effectue alors en sens inverse à l'intérieur du dispositif 26a.

A l'extérieur de la partie annulaire 66 et dans la zone située au-dessus de la partie 54 de plus forte épaisseur de la cuve 40, le corps 56 présente un évidement annulaire 70 dans lequel sont reçus plusieurs groupes de transducteurs 72 émetteurs d'ondes ultrasonores.

Chacun des groupes de transducteurs 72 est formé, par exemple, de plusieurs transducteurs alignés parallèlement à l'axe vertical du dispositif 26a, les groupes de transducteurs étant régulièrement répartis sur toute la circonférence. Le nombre et l'emplacement des transducteurs 72 dans chaque groupe ainsi que le nombre et l'emplacement de ces groupes dans l'évidement 70 sont déterminés en tenant compte notamment des contraintes du procédé (débit, vitesse, nombre de cycles dans la boucle, etc.) et de la hauteur de la partie annulaire 66 du passage formé dans le corps 56.

La disposition des transducteurs 72 dans le dispositif 26a leur permet d'émettre des ondes ultrasonores selon des directions orientées radialement par rapport à l'axe vertical du dispositif, de façon à créer un effet de cavitation sur toute la surface du liquide traversée par l'onde acoustique. La fréquence ultrasonore est choisie en fonction de la solution à traiter, cette fréquence étant par exemple de 20 kHz plus ou moins 5 kHz.

La forme des transducteurs 72 est choisie, en fonction de la fréquence, afin d'obtenir un effet de cavitation maximum. Ces transducteurs peuvent notamment avoir la forme de cylindres. Cependant, des formes ovoïdes ou en anneau peuvent également être utilisées.

Afin de protéger les transducteurs 72 des effets de l'irradiation, ils sont avantageusement gainés dans de l'acier inoxydable. Etant donné que les transducteurs ne sont pas en contact direct avec le liquide à traiter, aucune précaution particulière vis-à-vis de la corrosion ou de tout autre endommagement par contact n'a besoin d'être prévue.

L'alimentation électrique des transducteurs 72 est réalisée à partir de sources électriques extérieures (non représentées) situées dans la zone supérieure 36, par l'intermédiaire de conducteurs électriques 74. Ces conducteurs électriques sont avantageusement gainés de façon à présenter une bonne résistance à l'irradiation. De plus, ils traversent le bouchon 48 dans des tubes en hélice 76 qui garantissent l'absence de fuite des rayonnements de la cellule inférieure 38 dans la zone supérieure 36.

Les tubes en hélice 76 permettent également de créer une circulation forcée d'un fluide de refroidissement tel que de l'air à l'intérieur de l'évidement 70. Cette circulation forcée assure le refroidissement des transducteurs 72 qui tendent à s'échauffer, du fait de leur nombre.

Comme on l'a déjà mentionné, la partie active du dispositif 26a, placée à l'intérieur de la cuve 40, peut être facilement montée et démontée, par exemple au moyen d'une enceinte mobile d'évacuation telle que décrite dans le document FR-A-84 03312, ou de tout autre dispositif équivalent. Lorsque la partie active du dispositif se trouve à l'extérieur de la cuve 40, il suffit de la désolidariser du bouchon 48 pour accéder aux organes situés à l'intérieur du corps 56.

A titre d'exemple de mise en oeuvre du dispositif 26a, on a équipé un tel dispositif de douze groupes composés chacun de quatre transducteurs 72 émettant à 20 kHz, la partie annulaire 66 dans laquelle circulent les boues de fines à traiter présentant 11 mm de diamètre et une hauteur efficace de 160 mm. En faisant circuler dans ce dispositif des boues de fines de dissolution contenant 75 g de solide par litre de solution, dans lesquelles 85 % des particules avaient une taille supérieure à 140 µm et se présentaient en général sous forme d'agglomérats compris entre 150 µm et 250 µm, on a pu réduire 95 % des fines à une taille comprise entre 80 µm et 25 µm.

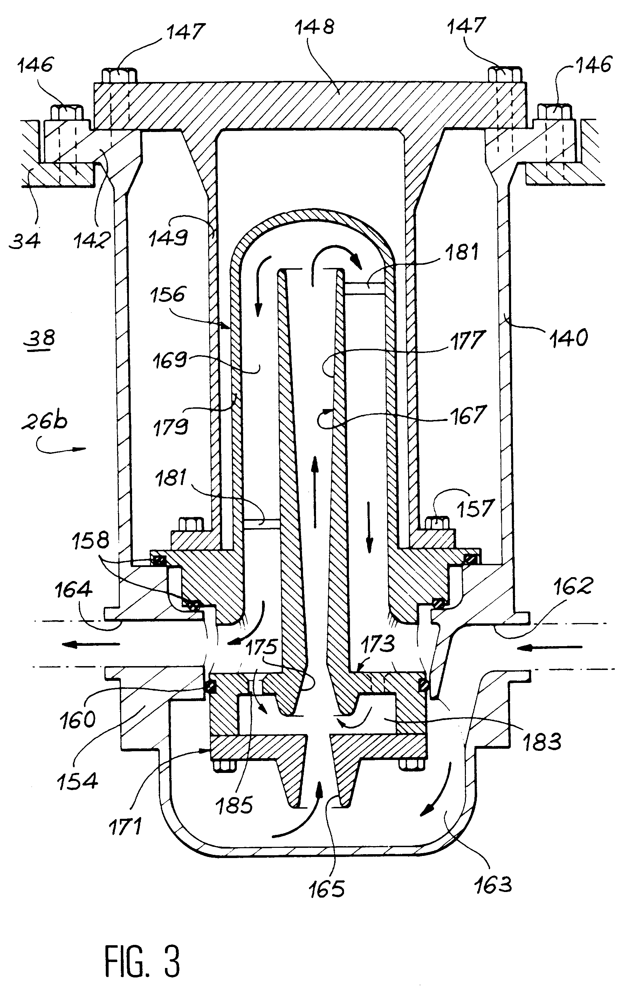

Un deuxième mode de réalisation du dispositif dilacérateur 26 utilisé dans la boucle 20 de l'installation illustrée sur la figure 1 va à présent être décrit en se référant à la figure 3. Ce dispositif, qui est désigné de façon générale par la référence 26b sur la figure 3, est un dispositif à tube de venturi dans lequel la désagrégation des agglomérats est obtenue sous l'effet des forces de cisaillement créées par les gradients radiaux de vitesse existant dans le tube de venturi.

Le montage du dispositif 26b de la figure 3 est analogue à celui du dispositif 26a de la figure 2. Ainsi, ce dispositif 26b est suspendu à la dalle de béton horizontale 34, de façon à être placé dans la cellule inférieure 38 située en dessous de cette dalle.

Le dispositif dilacérateur 26b comporte également une cuve cylindrique 140, d'axe vertical, dont la bride supérieure 142 est fixée sur la dalle 34 par des vis 146. La cuve 140 comporte également, dans sa partie inférieure, une zone 154 de plus forte épaisseur dont la face supérieure en gradin maintient en place le corps 156 de la partie active du dispositif. Ce corps 156 est fixé, par exemple par des vis 157, à l'extrémité inférieure d'une virole 149 qui fait saillie vers le bas à partir d'un bouchon 148 fixé de façon étanche sur la bride 142 de la cuve 140 par exemple par des vis 147.

Le corps 156 de la partie active du dispositif 26b repose sur la face supérieure de la partie 154 de plus forte épaisseur de la cuve 140 par l'intermédiaire de deux joints d'étanchéité annulaires 158. De plus, le corps 156 comporte une partie inférieure cylindrique qui coopère de façon étanche avec la surface intérieure cylindrique de la partie 154 de la cuve 140 par un joint d'étanchéité 160.

Un passage d'admission 162 formé dans la partie 154 de plus forte épaisseur de la cuve 140 débouche dans une chambre inférieure 163 formée dans la cuve 140 en dessous du joint d'étanchéité 160. Un passage d'évacuation 164, également formé dans la partie 154 de plus forte épaisseur de la cuve 140, débouche dans cette dernière entre les joints 158 et 160.

La chambre inférieure 163 communique avec l'orifice d'évacuation 164 par un passage formé dans le corps 156 et qui comprend successivement un injecteur 165, un tube de venturi 167 et un passage annulaire 169. L'injecteur 165 et le tube de venturi 167 sont disposés selon l'axe vertical de la cuve 140, alors que le passage annulaire 169 est centré sur ce même axe et placé autour du tube de venturi, au-dessus de l'injecteur.

De façon plus précise, l'injecteur 165 est formé dans une partie inférieure 171 du corps 156, qui est fixée, par exemple par des vis, à l'extrémité inférieure d'une partie intermédiaire 173 de ce même corps, dans laquelle est formé le tube de venturi 167. Les solutions de fines admises dans la chambre inférieure 163 par le passage d'admission 162 pénètrent dans l'injecteur 165 par l'extrémité inférieure de plus grand diamètre de ce dernier, avant de parcourir de bas en haut la partie inférieure convergente 175, puis la partie supérieure divergente 177 du tube de venturi 167.

Ces solutions redescendent ensuite par le passage annulaire 169, dont l'extrémité supérieure communique avec l'extrémité supérieure du tube de venturi 167 et dont l'extrémité inférieure débouche entre les joints 158 et 160, en face du passage d'évacuation 164. Ce passage annulaire 169 est formé entre la partie intermédiaire 173 du corps 156 et une partie supérieure 179 de ce dernier, portant les joints 158 et par laquelle le corps 156 est fixé à la virole 149. La liaison entre les parties 179 et 173 du corps 156 est réalisée par des tirants 181.

Enfin, l'extrémité inférieure du passage annulaire 169 communique avec une chambre de recirculation 183 formée dans le corps 156 entre l'injecteur 165 et le tube de venturi 167, par des trous 185 traversant la partie intermédiaire 173 du corps 156.

Les solutions de fines qui circulent dans la boucle 20 de la figure 1 sont introduites dans le dispositif 26b par le passage d'admission 162, de préférence à une pression d'au moins 300 kPa. Le liquide sous pression admis dans la chambre inférieure 163 traverse le dispositif de bas en haut en passant successivement par l'injecteur 165 et par les zones convergente 175 et divergente 177 du tube de venturi 167. L'écoulement du liquide dans l'injecteur 165, puis dans le tube de venturi 167 s'effectue à grande vitesse. Ainsi, pour un débit d'environ 5 m³/h de liquide introduit dans le dispositif 26b et un diamètre de sortie de l'injecteur 165 d'environ 10 mm, la vitesse atteinte par le liquide est d'environ 18 m/s.

Au débit primaire du liquide parcourant de bas en haut l'injecteur puis le tube de venturi s'ajoute le débit induit résultant de l'entraînement par ce liquide primaire du liquide introduit dans la chambre de recyclage 183 au travers des trous 185. Des essais ont montré que le débit induit est très proche du débit primaire. Par conséquent, le débit de liquide traversant le tube de venturi 167 correspond à environ 10 m³/h dans l'exemple cité précédemment.

Le liquide sortant à grande vitesse de l'extrémité supérieure du tube de venturi 167 heurte l'extrémité supérieure en forme de calotte de la partie 179 du corps 156 et redescend par le passage annulaire 169. Une partie du liquide sort alors du dispositif 26b par le passage d'évacuation 164, alors que l'autre partie est recyclée dans la chambre 183 par les trous 185.

Le liquide qui s'écoule dans l'injecteur 165 puis dans le tube de venturi 167 présente un très fort gradient radial de vitesse, c'est-à-dire que la vitesse d'écoulement du liquide selon l'axe vertical du dispositif est beaucoup plus important à proximité immédiate de cet axe que le long des parois de l'injecteur et du tube de venturi. Le liquide et les particules solides agglomérées qu'il véhicule sont donc soumis à l'intérieur de l'injecteur 165 et du tube de venturi 167 à des forces de cisaillement très élevées, qui désagrègent les agglomérats.

Une particule soumise à ces forces de cisaillement se divise en particules plus petites, jusqu'à ce que la taille des particules soit suffisamment petite pour que le cisaillement induit par le gradient radial de vitesse dans l'injecteur 165 et dans le tube de venturi 167 ne soit plus suffisant pour casser ces particules.

Par exemple, on a constaté que le passage dans le dispositif 26b d'une suspension contenant des particules de diamètre moyen proche de 30 µm a pour effet de réduire ce diamètre moyen à une valeur comprise entre 10 µm et 15 µm après un seul passage et à une valeur proche de 5 µm après recyclage.

Dans un autre essai, on a recensé les particules en suspension de diamètre supérieur à 100 µm. Le liquide entrant initialement dans le dispositif 26b comprenant 4 % de particules de ce type, il n'en contenait plus que 3 % à la sortie du tube de venturi 167 après un premier passage, ce pourcentage étant ramené à 1,5 % après un recyclage et à 0,7 % après deux recyclages.

Comme dans le premier mode de réalisation décrit précédemment en se référant à la figure 2, le dispositif 26b est conçu de façon à permettre un démontage à distance du bouchon 148 et de la partie active du dispositif, afin par exemple de remplacer celle-ci en totalité ou en partie, lorsque son usure due au caractère abrasif des particules présentes dans le liquide traité le nécessite.

Dans le dispositif de dilacération 26b qui vient d'être décrit en se référant à la figure 3, les boues de fines à traiter s'écoulent de bas en haut à l'intérieur de l'éjecteur formé par l'injecteur 165 et par le tube de venturi 167. Dans la pratique, des essais ont montré qu'un meilleur rendement peut être obtenu en faisant circuler le liquide de haut en bas à l'intérieur de cet éjecteur.

Pour cela, on conçoit aisément que les agencements de l'injecteur et du tube de venturi peuvent être inversés dans le corps contenant la partie active du dispositif. Le passage d'admission par lequel le liquide à traiter est admis dans le dispositif communique alors avec l'injecteur situé dans la partie supérieure du corps par un passage annulaire. Ce liquide s'écoule ensuite de haut en bas dans l'injecteur puis dans le tube de venturi avant d'être évacué par un passage formé dans la partie basse du corps, puis par un passage d'évacuation formé dans le fond de la cuve. Un recyclage du liquide à traiter peut être obtenu en prévoyant, entre le passage annulaire- d'amenée du liquide jusqu'à l'injecteur et le passage central formant le tube de venturi un second passage annulaire qui communique avec chacune des extrémités du tube de venturi. Un déflecteur est alors formé avantageusement dans le corps de la partie active du dispositif, sous l'extrémité inférieure du tube de venturi, afin d'éviter le dépôt de particules à ce niveau et de permettre le recyclage d'une partie du liquide à traiter par ce second passage annulaire.

Par ailleurs, le dispositif dilacérateur 26b à tube de venturi qui vient d'être décrit en se référant à la figure 3 comprend un ensemble éjecteur à recirculation non cavitant.

En modifiant les paramètres du procédé, on peut transformer cet ensemble éjecteur en ensemble éjecteur à recirculation cavitant. Dans ce cas, on obtient une efficacité encore accrue du dispositif, mais les risques d'abrasion sont plus importants. Cette solution peut cependant être utilisée lorsque les liquides à traiter ne nécessitent que des temps de fonctionnement réduits.

En variante, on peut également utiliser des dispositifs comprenant des tubes de venturi sans recircculation, lorsque les particules solides véhiculées par le liquide sont faiblement agglomérées. Lorsqu'une désagrégation maximum de ces particules doit impérativement être obtenue comme c'est notamment le cas pour les fines de dissolution obtenues lors du retraitement des combustibles nucléaires irradiés, l'utilisation de tubes de venturi à recirculation reste préférable.

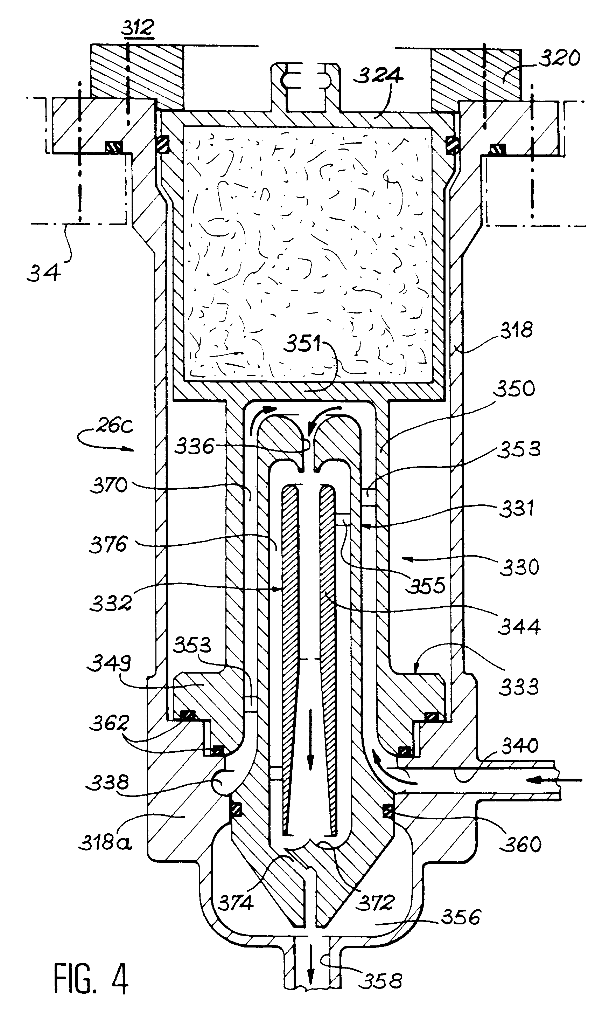

Ainsi, comme dans le mode de réalisation décrit en se référant à la figure 3, le dispositif 26c illustré sur la figure 4 comprend une cuve cylindrique 318, d'axe vertical, suspendue à une dalle horizontale 34, et un ensemble éjecteur 330 reçu de façon interchangeable dans la cuve 318, le remplacement de cet ensemble éjecteur pouvant être effectué depuis la zone 312 située au-dessus de la dalle 34.

Le corps de l'ensemble éjecteur 330 comporte trois parties 331, 332 et 333 agencées coaxialement autour de l'axe vertical de la cuve 318. La partie extérieure 333 comporte, comme dans le mode de réalisation de la figure 3, une portion inférieure 349 en forme de bague qui repose sur une partie 318a de plus forte épaisseur de la cuve 318 par deux joints d'étanchéité 362. Cette portion 349 est prolongée vers le haut par une portion tubulaire 350 fermée à son extrémité supérieure par une portion horizontale 351 fixée au couvercle 324 accessible depuis la zone 312.

Cette partie 333 supporte intérieurement par des tirants soudés 353, la partie intermédiaire 331 qui présente la forme d'un cylindre creux dont l'extrémité supérieure porte en son centre un injecteur 336. La portion inférieure de la partie 331 porte un joint d'étanchéité 360 qui coopère avec la partie 318a de la cuve 318 en dessous des joints 362.

La partie 331 supporte elle-même intérieurement, par des tirants 355, la partie centrale 332 constituant un tube de venturi 344 disposé, ainsi que l'injecteur 336, coaxialement à l'axe vertical de la cuve 318. L'extrémité supérieure d'entrée du tube de venturi 344 est tournée vers le haut et fait face à l'extrémité de sortie de l'injecteur 336.

Le passage d'admission 340 du liquide que l'on désire traiter, qui est formé dans la partie 318a de plus forte épaisseur de la cuve 318, débouche entre les joints 360 et 362 de préférence selon une direction tangentielle, de façon à créer un mouvement tourbillonnaire du liquide dans une chambre annulaire extérieure 370 formée entre les parties extérieure 333 et intermédiaire 331.

A son extrémité supérieure, le passage annulaire extérieur 370 communique avec l'extrémité supérieure d'entrée de l'injecteur 336, qui communique lui-même avec le tube de venturi 344.

L'extrémité inférieure du tube de venturi 344 débouche en face d'un déflecteur 372 formé dans la portion inférieure de la partie intermédiaire 331. La forme de ce déflecteur 372 permet d'éviter une accumulation de particules à cet endroit, en obligeant le liquide à effectuer un changement de direction radialement vers l'extérieur, puis vers le haut. Des passages 374 formés dans cette portion inférieure de la partie 331 débouchent à leur extrémité supérieure dans le fond du déflecteur 372 et à leur extrémité inférieure dans une chambre d'évacuation 356 formée dans le fond de la cuve 318, en dessous du joint 360. Ces passages 374 présentent une partie inférieure commune disposée selon l'axe de la cuve 318 et située immédiatement au-dessus d'un passage d'évacuation 358 formé, selon cet axe, dans le fond de la cuve 318.

Un passage annulaire intérieur de recyclage 376 est également formé entre la partie intermédiaire 331 et la partie centrale 332 formant le tube de venturi 344. Ce passage 376 débouche à son extrémité inférieure au-dessus du déflecteur 372 et, à son extrémité supérieure, entre l'injecteur 336 et le tube de venturi 344.

Dans le dispositif 316 qui vient d'être décrit en se référant à la figure 4, le liquide à traiter, injecté sous pression par le passage d'admission 340, monte d'abord par le passage annulaire extérieur 370 à l'intérieur de l'ensemble éjecteur 330. Il traverse ensuite, selon un mouvement descendant, successivement l'injecteur 336 et le tube de venturi 344. A l'extrémité inférieure de ce dernier, une partie du liquide est directement évacuée par les passages 374 et 358, alors qu'une autre partie est recyclée dans le tube de venturi par le passage annulaire de recyclage 376.

Les dispositifs qui viennent d'être décrits successivement en se référant aux figures 3 et 4 comprennent dans les deux cas un ensemble éjecteur à recirculation non cavitant, qui constitue, d'après les essais, l'ensemble éjecteur le plus performant pour obtenir la désagrégation souhaitée des particules.

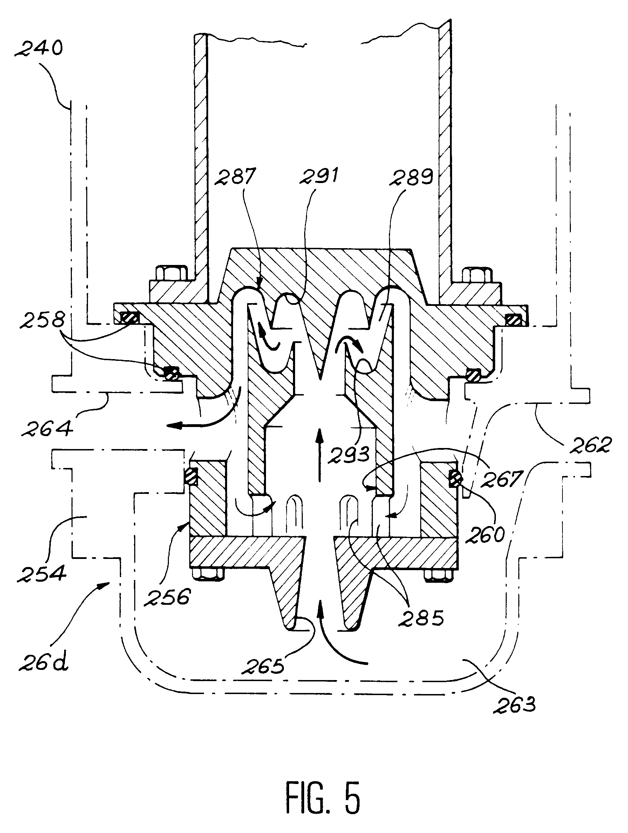

Sur la figure 5, on a représenté de façon schématique un quatrième mode de réalisation du dispositif dilacérateur 26 utilisé dans la boucle 20 de l'installation de traitement illustrée sur la figure 1. Ce dispositif est désigné de façon générale par la référence 26d.

Comme dans le mode de réalisation décrit précédemment en se référant à la figure 3, le corps 256 de la partie active du dispositif est placé de façon interchangeable dans une cuve 240, d'axe vertical, elle-même suspendue à une dalle horizontale (non représentée). Un passage d'admission 262 formé dans une partie 254 de plus forte épaisseur de la cuve 240 débouche dans une chambre inférieure 263 formée dans la partie basse de la cuve, en dessous d'un joint d'étanchéité 260. Un passage d'évacuation 264 également formé dans la partie 254 de la cuve 240 débouche à l'intérieur de la cuve entre le joint 260 et des joints 258, également portés par le corps 256.

Entre la chambre inférieure 263 et le passage d'évacuation 264, le liquide à traiter circule par un passage formé dans le corps 256. Ce passage comporte successivement un injecteur 265, un tube de venturi 267 et un système de chicanes 287. Le système de chicanes 287 donne à la partie supérieure du corps 256 une hauteur réduite et un diamètre accru.

Le système de chicanes 287 est constitué par un passage 289 ménagé entre deux profils coaxiaux en vis-à-vis 291 et 293. Une partie du liquide sortant du passage 289 est évacuée par le passage d'évacuation 264, alors qu'une autre partie de ce liquide est recyclée dans le tube de venturi 267 par des trous 285 formés entre ce dernier et l'injecteur 265.

Dans le dispositif dilacérateur 26d qui vient d'être décrit brièvement en se référant à la figure 5, à l'effet de désagrégation des particules agglomérées obtenu par cisaillement dans l'injecteur 265 et dans le tube de venturi 267 de la manière décrite précédemment, s'ajoute une désagrégation supplémentaire des particules sous l'effet des chocs de celles-ci contre les parois du système de chicanes 287.

Lorsque le dispositif dilacérateur 26 est du type à tube de venturi comme ceux qui viennent d'être décrits successivement en se référant aux figures 3 à 5, on détermine avantageusement le diamétre de l'injecteur afin que la pression au col du venturi soit approximativement égale à la pression atmosphérique, ce qui permet d'éviter les problémes de dégazage et de cavitation.

En utilisant un dispositif comportant un injecteur de 11 mm de diamètre associé dans la boucle de dilacération 20 à une pompe 24 refoulant à 4 bars environ, pour un débit de 78 m/h, on a pu déterminer en traitant des solutions de fines à environ 75 g/l qu'un temps moyen de fonctionnemment de 45 heures permet de faire disparaître pratiquement en totalité les particules dont le diamètre moyen est supérieur à 25 µm, sachant qu'un fonctionnement d' une heure correspond à environ 32 passages dans la boucle.

Sur la figure 6, on a représenté un exemple de réalisation du tamiseur de fines 30 qui est placé à l'entrée de la tuyauterie de transfert 28 des fines vers le site de vitrification.

Ce tamiseur de fines 30 est suspendu, de même que le dispositif dilacérateur 26, à une dalle 34' de protection biologique qui peut être dans certains cas la même que la dalle 34. Le tamiseur de fines 30 se trouve ainsi placé dans la cellule inférieure 38' dans laquelle sont traitées les fines.

Le tamiseur de fines 30 comprend une cuve 78, d'axe vertical, comportant une bride supérieure 80 fixée sur la dalle 34' par des vis 82. La cuve 78 comporte intérieurement, dans sa partie médiane, un épaulement 84 sur lequel repose, de façon étanche et amovible, une platine horizontale 86 munie en son centre d'un organe de préhension 88 autorisant son démontage et son montage à distance à l'aide de moyens de manutention appropriés. La platine 86 repose sur l'épaulement 84 par l'intermédiaire d'un joint d'étanchéité (non représenté). Au moins un passage d'admission 90 traverse la cuve 78 au-dessus de l'épaulement 84 et débouche dans la cuve, de préférence selon une direction tangentielle. Une tuyauterie 92 d'évacuation du fluide tamisé débouche quant à elle à proximité immédiate du fond conique 94 de la cuve 78.

Le tamiseur de fines 30 est également équipé d'une tuyauterie 96 de vidange, qui débouche comme la tuyauterie de sortie 92 à proximité immédiate du fond conique 94 de la cuve 78, et d'une tuyauterie 98 d'évacuation des gaz, qui débouche au-dessus de l'épaulement 84.

Dans la platine 86 sont aménagés des trous cylindriques 100, de même diamétre, qui sont réguliérement répartis sur la circonférence de la platine, autour de l'axe vertical de la cuve 78. Dans chacun de ces trous 100 est reçue une cartouche filtrante 102, en forme de doigt de gant, dont la partie cylindrique est revêtue intérieurement d'un milieu filtrant, constitué par exemple par une toile métallique. Chacune des cartouches filtrantes 102 repose sur la platine 86 par une collerette formée sur son extrémité supérieure ouverte. Les cartouches peuvent ainsi être aisément montées et démontées.

Il est à noter que dans certaines conditions opératoires, le nombre de cartouches filtrantes 102 peut être inférieur au nombre de trous 100 formés dans la platine 86. Des bouchons sont alors placés sur les trous 100 inoccupés.

A l'intérieur de chacune des cartouches filtrantes 102 est placée une sonde ultrasonore 104. Chaque sonde 104 comprend une gaine cylindrique 106, fermée à chacune de ses extrémités, et un transducteur ultrasonore 108 logé de façon étanche à l'intérieur de la gaine 106. La gaine 106, réalisée en acier inoxydable, s'étend sur environ la moitié de sa hauteur à l'intérieur de la cartouche filtrante 102 correspondante et, sur une hauteur comparable, au-dessus de cette cartouche, de façon à reposer par un épaulement formé à son extrémité supérieure sur une platine 110, qui repose elle-même sur un épaulement formé à l'intérieur de la cuve 78, au-dessus du passage d'admission 90 et de la tuyauterie 98 d'évacuation des gaz. Des joints d'étanchéité 112 et 114 assurent respectivement l'étanchéité entre chacune des gaines 106 et la platine 110 et entre la platine 110 et la cuve 78.

De même que la platine 86 supportant les cartouches filtrantes 102, la platine 110 supportant les sondes ultrasonores 104 est munie en son centre, sur sa face supérieure, d'un organe 116 autorisant sa préhension par des moyens de manutention appropriés placés au-dessus de la dalle 34′.

Les extrémités inférieures des gaines 106 qui sont reçues dans les cartouches filtrantes 102 sont séparées de ces dernières par un espace annulaire dans lequel peut s'écouler la solution de fines introduites dans le tamiseur 30 par le passage 90.

Comme l'illustre la figure 6, les transducteurs ultrasonores 108 sont placés dans les parties inférieures des gaines 106, de façon à couvrir toute la hauteur du milieu filtrant placé sur la paroi cylindrique des cartouches filtrantes 102. La forme de ces transducteur 108, de préférence cylindrique, est étudiée de façon à obtenir une cavitation maximale dans la zone annulaire formée entre chacune des sondes 104 et la cartouche filtrante 102 qui lui correspond.

L'alimentation électrique de chacun des transducteurs 108 est assurée par une source située dans la zone accessible, au-dessus de la dalle 34', au travers d'un conducteur électrique 118. Ce conducteur traverse de façon étanche l'extrémité supérieure de chacune des gaines 106 ainsi qu'un bouchon 120 qui ferme l'extrémité supérieure de la cuve 78 et complète ainsi la protection neutronique assurée par la dalle 34'.

De façon plus précise, dans le mode de réalisation illustré sur la figure 6, une ouverture circulaire est formée dans le bouchon 120, à la verticale de chacune des sondes ultrasonores 104, afin de permettre le montage et le démontage de celles-ci sans enlever le bouchon 120. Chacune de ces ouvertures circulaires est normalement obturée par un petit bouchon 122 que traverse le conducteur électrique 118 de la sonde correspondante. Pour éviter les fuites de rayonnement à ce niveau, la traversée des bouchons 122 par les conducteurs 118 s'effectue dans des tubes en hélice 124.

Pour permettre le démontage de chacune des sondes ultrasonores 104 au travers du trou du bouchon 120, après enlèvement du petit bouchon 122 correspondant, chacune des gaines 106 des sondes ultrosonores 104 porte sur sa face supérieure un organe de préhension 125 apte à être saisi par un moyen de manutention approprié placé au-dessus de la dalle 34'. La platine 110 à laquelle sont suspendues toutes les sondes ultrasonores 104 est elle-même fixée en dessous du bouchon 120, de telle sorte que l'enlèvement de ce dernier permet d'accéder à la platine 86 portant les cartouches filtrantes 102, par exemple pour remplacer ces cartouches.

La liaison entre le bouchon 120 et la platine 110 est assurée par un prolongement cylindrique de cette dernière, qui contribue aussi au maintien en place des sondes ultrasonores 104 sur la platine 110. Ainsi, pour chacune des sondes 104, une plaque de verrouillage horizontale 126 coopère avec ce prolongement cylindrique de la platine 110 par une liaison à baïonnette 128. Chaque plaque 126 supporte une vis 130 qui est axialement alignée avec la sonde ultrasonore 104 correspondante lorsque la plaque 126 est en place. Les vis 130 sont manoeuvrables depuis la zone accessible située au-dessus de la dalle 34′, après enlèvement des petits bouchons 122 qui leur correspondent. Chacune des vis 130 coopère avec une partie filetée formée à l'extrémité supérieure de l'organe de préhension 125 de la sonde 104 correspondante, alors que cette dernière est immobilisée en rotation par la coopération de la plaque 126 avec une partie prismatique formée à la base de l'organe 125.

Par conséquent, une action sur chacune des vis 130 permet à volonté soit de désolidariser la plaque 126 de la sonde 104 correspondante, soit au contraire, par expansion, de plaquer cette dernière contre la platine 110 pour assurer son blocage. Lorsque, après enlèvement des bouchons 122, une ou plusieurs des vis 130 sont désolidarisées des sondes 104 correspondantes, le démontage de ces dernières peut être effectué après enlèvement des plaques de verrouillage 126 au travers des trous laissés par l'enlèvement des petits bouchons 122.

Lorsque le tamiseur de fines est en fonctionnement, chacune des sondes ultrasonores 108 est alimentée électriquement et émet des ondes ultrasonores orientées radialement par rapport à la sonde 104, de façon à créer un effet de cavitation sur le liquide présent dans l'espace annulaire formé entre la sonde et la cartouche filtrante 102 qui lui correspond. Ce liquide, introduit dans le tamiseur de fines 30 par le passage 90, est donc soumis avant de traverser le milieu filtrant garnissant chacune des cartouches filtrantes 102 à une nouvelle action de dilacération. Les particules dont la taille est supérieure à un seuil prédéterminé en fonction notamment des risques d'obturation de la tuyauterie 28 (figure 1) sont retenues par le milieu filtrant de chacune des cartouches 102. Le liquide ainsi que les particules de taille suffisamment faible traversent les cartouches filtrantes et descendent dans le fond conique 94 de la cuve 78, où ils sont repris par la tuyauterie d'évacuation 92.

Lors du fonctionnement du tamiseur de fines 30, les conditions opératoires doivent être telles que les parties des sondes 104 dans lesquelles sont logés les transducteurs ultrasonores 108 soient noyées en permanence. De plus, la pression sur le milieu filtrant de chacune des cartouches 102 doit être suffisante pour permettre un fonctionnement correct de ces cartouches, tout en restant limitée afin que les particules ne soient pas plaquées contre le milieu filtrant et autorisent une cavitation suffisante, en fonction de la puissance des transducteurs. En outre, la solution traitée dans le tamiseur de fines doit rester à une température ne permettant pas la dégradation des transducteurs.

Les transducteurs 108 sont également utilisés pour décolmater les cartouches filtrantes 102 du tamiseur de fines 30 lorsque cela est nécessaire.

A titre d'exemple, on a utilisé un tamiseur de fines comprenant quatre cartouches filtrantes dont le milieu filtrant était composé de toiles métalliques de 25 µm ou de 40 µm selon la granulométrie désirée. Ces cartouches filtrantes avaient un diamètre interne de 92 mm et une hauteur de 160 mm. Dans chacune de ces cartouches a été placé un transducteur cylindrique composé de la juxtaposition de trois disques de céramique. La puissance électrique instantanée nominale était alors de 750 W, avec un taux de charge de 20 % correspondant à un fonctionnement pulsé et une intensité de 0,87 A efficace. Ce fonctionnement pulsé permet de perturber la précouche formée par les particules les plus grosses, afin de laisser passer les plus fines, de casser par effet de cavitation les agglomérats de grosses particules et de limiter la charge thermique de l'appareil. Un tel tamiseur de fines a permis de garantir le calibrage désiré des particules transportées jusqu'au site de vitrification.

Avantageusement, les performances du procédé et de l'installation selon l'invention sont encore améliorées en procédant, à l'intérieur même du clarificateur 10, à une dilacération préalable des boues de fines qui se trouvent dans le fond du clarificateur, après rinçage du gâteau.

Dans ce cas et comme l'illustre très schématiquement la figure 1, on plonge par une ouverture formée dans le couvercle du clarificateur 10 une sonde ultrasonore 132 à l'intérieur de ce dernier. Cette sonde ultrasonore est composée d'une gaine en acier inoxydable dans laquelle est placé un transducteur ultrasonore.

Dans le cas où le clarificateur 10 est constitué par une décanteuse pendulaire centrifuge, on fait tourner cette dernière lentement tout en actionnant la sonde ultrasonore 132. Cette opération permet, au bout d'un certain temps, grâce à l'effet de cavitation créé par le transducteur, de réduire la taille des particules avant que la solution ne soit transférée dans la cuve de transfert 16.

Des essais effectués au moyen d'un transducteur cylindrique ayant une puissance instantanée nominale de 500 W, un taux de charge de 20 % correspondant à un fonctionnement pulsé et émettant à 20 kHz ont permis d'obtenir, à partir de particules dont la taille était comprise initialement entre 360 µm et 3000 µm, après 5,5 h de traitement, 45 % de particules d'un diamètre inférieur à 40 µm, 5 % de particules comprises entre 40 et 360 µm et 50 % de particules comprises entre 360 et 3000 µm. Il est également possible de faire fonctionner le tamiseur de fines à ultrasons sans pulsation de courant.

L'utilisation d'une sonde ultrasonore 132 à l'intérieur même du clarificateur 10 permet de réduire encore les risques de bouchage dans la tuyauterie de transfert 28 et de diminuer le temps de traitement des fines dans la boucle 20.

Bien entendu, l'invention n'est pas limitée aux modes de réalisation qui viennent d'être décrits à titre d'exemples, mais en couvre toutes les variantes. On comprend notamment que la structure des différents appareils décrits peut être sensiblement modifiée, en fonction notamment des conditions opératoires et des résultats à obtenir.

## Revendications

1. Procédé de traitement d'agglomérats de particules solides en suspension dans un liquide, afin d'obtenir un mélange hétérogène, et de transfert de ce mélange, sans dépôt, entre une cuve de transfert (16) communiquant avec le fond d'un appareil de décantation (10), et une cuve de stockage (32), par une tuyauterie (28) de grande longueur, ce procédé comprenant les étapes suivantes :
- réduction préalable de la granulométrie des particules, à l'intérieur de l'appareil de décantation (10), au moyen d'ondes ultrasonores ;
- transfert des particules dans la cuve de transfert (16) par gravité ;
- réduction de la granulométrie des particules admises dans la cuve de transfert (16), par circulation de ces particules dans une boucle fermée (20) comportant des moyens (26) pour désagréger les agglomérats, jusqu'à obtention d'une granulométrie moyenne inférieure à un premier seuil déterminé ; et
- transfert des particules de la cuve de transfert (16) dans la cuve de stockage (32), par la tuyauterie (28) de grande longueur, en tamisant ces particules à proximité immédiate de la cuve de transfert (16), pour retenir les particules de granulométrie supérieure à un deuxième seuil déterminé.

2. Procédé selon la revendication 1, caractérisé par le fait qu'il est appliqué au traitement d'agglomérats de particules obtenues après découpe, dissolution et décantation des combustibles nucléaires irradiés, avant leur transfert dans une cuve de stockage (32).

3. Procédé selon l'une quelconque des revendications 1 et 2, caractérisé par le fait qu'on utilise dans la boucle (20) des moyens ultrasonores (26a) pour désagréger les agglomérats.

4. Procédé selon l'une quelconque des revendications 1 et 2, caractérisé par le fait qu'on utilise dans la boucle (20) un dispositif à tube de venturi (26b,26c) pour désagréger les agglomérats.

5. Procédé selon la revendication 4, caractérisé par le fait qu'on utilise un dispositif (26c) comportant un tube de venturi (267) suivi d'un système de chicanes (287).

6. Procédé selon l'une quelconque des revendications précédentes, caractérisé par le fait qu'on procède au tamisage des particules dans un tamiseur à ultrasons (30).

7. Installation de traitement d'agglomérats de particules solides en suspension dans un liquide, afin d'obtenir un mélange hétérogène, et de transfert de ce mélange, sans dépôt, entre une cuve de transfert (16) communiquant avec le fond d'un appareil de décantation -(10), et une cuve de stockage (32), par une canalisation (28) de grande longueur, ce te installation comprenant :
- un transducteur ultrasonore (132) placé dans l'appareil de décantation (10), de façon à effectuer une réduction préalable de la granulométrie des particules ;
- une tuyauterie assurant le transfert des particules, par gravité, de l'appareil de décantation (10) dans la cuve de transfert (16) ;
- une boucle fermée (20) comportant la cuve de transfert (16), des moyens de pompage (24) et des moyens (26) pour désagréger les agglomérats ; et
- un tamiseur de particules (30) placé dans la tuyauterie (28) de grande longueur, à proximité de la cuve de transfert (16).

8. Installation selon la revendication 7, caractérisé par le fait qu'elle est placée en aval de moyens de découpe, dissolution et décantation de combustibles nucléaires irradiés.

9. Installation selon l'une quelconque des revendications 7 et 8, caractérisée par le fait que les moyens pour désagréger les agglomérats comprennent un dispositif (26a) comportant au moins un transducteur (72) émetteur d'ondes ultrasonores.

10. Installation selon l'une quelconque des revendications 7 et 8, caractérisée par le fait que les moyens pour désagréger les agglomérats comprennent un dispositif (26b,26c,26d) à tube de venturi (167,267, 344).

11. Installation selon la revendication 10, caractérisée par le fait que le dispositif (26b,26c,26d) à tube de venturi comprend, en amont du tube de venturi, un injecteur (165,265,336) séparé du tube de venturi par un passage de recyclage (183,285,376).

12. Installation selon l'une quelconque des revendications 10 et 11, caractérisée par le fait que le dispositif (26d) à tube de venturi comprend, en aval du tube de venturi (267), un système de chicanes (287).

13. Installation selon l'une quelconque des revendications 10 et 11, caractérisée par le fait que le dispositif (26c) à tube de venturi comprend un déflecteur (372), placé à la sortie du tube de venturi (344).

14. Installation selon l'une quelconque des revendications 7 à 13, caractérisée par le fait que le tamiseur de particules (30) est un tamiseur à ultrasons.

15. Installation selon la revendication 14, caractérisée par le fait que le tamiseur à ultrasons fonctionne par pulsation de courant.

16. Installation selon l'une quelconque des revendications 7 à 15, caractérisée par le fait que les moyens (26) pour désagréger les agglomérats et le tamiseur de particules (30) comprennent une cuve (40,78) suspendue à une dalle horizontale (34,34') et démontable depuis une zone accessible située au-dessus de cette dalle.

## Claims

1. Process for the treatment of agglomerates of solid particles suspended in a liquid in order to obtain a heterogeneous mixture and the transfer of said mixture in deposit-free manner between a transfer tank (6) communicating with the bottom of a settling apparatus (10) and a storage tank (32) by means of a long pipe (28), said process comprising the following stages:
prior reduction of the grain size of the particles within the settling apparatus (10) by means of ultrasonic waves,
transfer of the particles into the transfer tank (16) by gravity,
reduction of the grain size of the particles introduced into the transfer tank (16) by the circulation of said particles in a closed loop (20) having means (26) for disintegrating the agglomerates until an average grain size below a first given threshold is obtained and
transferring the particles from the transfer tank (16) into the storage tank (32) by the long pipe (28), whilst screening said particles in the immediate vicinity of the transfer tank (16), so as to retain the particles having a grain size exceeding a second given threshold.

2. Process according to claim 1, characterized in that it is applied to the treatment of agglomerates of particles obtained following the cutting up, dissolving and settling of irradiated nuclear fuels prior to their transfer into a storage tank (32).

3. Process according to either of the claims 1 and 2, characterized in that use is made in the loop (20) of ultrasonic means (26a) for disintegrating the agglomerates.

4. Process according to either of the claims 1 and 2, characterized in that in the loop (20) use is made of a venturi tube device (26b,26c) for disintegrating the agglomerates.

5. Process according to claim 4, characterized in that use is made of a device (26c) having a venturi tube (267) followed by a system of baffles (287).

6. Process according to any one of the preceding claims, characterized in that the particles are screened in an ultrasonic screening machine (30).

7. Installation for the treatment of agglomerates of solid particles suspended in a liquid in order to obtain a heterogeneous mixture and the transfer of said mixture in deposit-free manner between a transfer tank (16) communicating with the bottom of a settling apparatus (10) and a storage tank (32) by a long pipe (28), said installation comprising:
an ultrasonic transducer (132) placed in the settling apparatus (10) so as to perform a prior reduction of the grain size of the particles,
a pipe ensuring the transfer of the particles by gravity from the settling apparatus (10) into the transfer tank (16),
a closed loop (20) having the transfer tank (16), pumping means (24) and means (26) for disintegrating the agglomerates and
a particle screening machine (30) placed in the long pipe (28) in the vicinity of the transfer tank (16).

8. Installation according to claim 7, characterized in that it is placed downstream of the means for the cutting up, dissolving and settling the irradiated nuclear fuels.

9. Installation according to either of the claims 7 and 8, characterized in that the means for disintegrating the agglomerates comprise a device (26a) having at least one transducer (72) emitting ultrasonic waves.

10. Installation according to either of the claims 7 and 8, characterized in that the means for disintegrating the agglomerates comprise a device (26b,26c,26d) having a venturi tube (167, 267,344).

11. Installation according to claim 10, characterized in that the venturi tube device (26b,26c,26d) has, upstream of the venturi tube, an injector (165,265,336) separated from the venturi tube by a recycling passage (183,285,376).

12. Installation according to either of the claims 10 and 11, characterized in that the venturi tube device (26d) has, downstream of the venturi tube (267), a baffle system (287).

13. Installation according to either of the claims 10 and 11, characterized in that the venturi tube device (26c) has a deflector (372) placed at the outlet of the venturi tube (344).

14. Installation according to any one of the claims 7 to 13, characterized in that the particle screening machine (30) is an ultrasonic screening machine.

15. Installation according to claim 14, characterized in that the ultrasonic screening machine operates by current pulsations.

16. Installation according to any one of the claims 7 to 15, characterized in that the means (26) for disintegrating the agglomerates and the particle screening machine (30) comprise a tank (40,78) suspended on a horizontal slab (34,34') and which can be dismantled from an accessible area located above said slab.

## Patentansprüche

1. Verfahren zur Behandlung von körnigen Agglomeraten in Suspension in einer Flüssigkeit, um eine heterogene Mischung zu erhalten, und zum Übertragen dieser Mischung ohne Bodensatz zwischen einem Transportbehälter (16), der mit dem Boden einer Dekantierungsvorrichtung (10) in Verbindung steht, und einem Aufbewahrungsbehälter (32) mittels einer Rohrleitung (28) großer Länge, wobei dieses verfahren die folgenden Schritte umfaßt:
- Verringern der Korngröße der Teilchen im voraus im Inneren der Dekantierungsvorrichtung (10) mittels Ultraschallwellen;
- Überführen der Teilchen in den Transportbehälter (16) durch das Eigengewicht;
- Verringern der Korngröße der in den Transportbehälter (16) zugelassenen Teilchen, indem man diese Teilchen in einer geschlossenen Schleife (20) umlaufen läßt, die Einrichtungen (26) zum Lockern der Agglomerate umfaßt, bis zum Erhalten einer mittleren Korngröße, die kleiner als eine erste, vorbestimmte Schwelle ist; und
- Uberführen der Teilchen aus dem Transportbehälter (16) in den Aufbewahrungsbehälter (32) durch die Rohrleitung (28) großer Länge, indem diese Teilchen in unmittelbarer Nähe des Transportbehälters (16) gesiebt werden, um die Teilchen mit einer Korngröße zurückzuhalten, die größer als eine zweite, bestimmte Schwelle ist.

2. Verfahren gemäß Anspruch 1, **dadurch gekennzeichnet**, daß es auf die Behandlung von körnigen Agglomeraten angewendet wird, die nach dem Zertrennen, Lösen und Dekantieren von bestrahlten Kernbrennstoffen vor deren Überführung in einen Aufbewahrungsbehälter (32) erhalten werden.

3. Verfahren gemäß irgendeinem der Ansprüche 1 und 2, **dadurch gekennzeichnet**, daß man in der Schleife (20) Ultraschalleinrichtungen (26a) zum Zertrennen der Agglomerate verwendet.

4. Verfahren gemäß irgendeinem der Ansprüche 1 oder 2, **dadurch gekennzeichnet**, daß man in der Schleife (20) eine Vorrichtung mit einem Venturi-Rohr (26b, 26c) zum Zertrennen der Agglomerate verwendet.

5. Verfahren gemäß Anspruch 4, **dadurch gekennzeichnet**, daß man eine Vorrichtung (26c) verwendet, die ein Venturi-Rohr (267) umfaßt, dem ein System von Schikanen (287) folgt.

6. Verfahren gemäß irgendeinem der vorhergehenden Ansprüche, **dadurch gekennzeichnet**, daß man das Sieben der Teilchen in einer Ultraschall-Siebvorrichtung (30) vornimmt.

7. Anlage zur Behandlung von körnigen Agglomeraten in Suspension in einer Flüssigkeit, um eine heterogene Mischung zu erhalten, und zum Übertragen dieser Mischung ohne Bodensatz zwischen einem Transportbehälter (16), der mit dem Boden einer Dekantierungsvorrichtung (10) in Verbindung steht, und einem Aufbewahrungsbehälter (32) mittels einer Leitung (28) großer Länge, wobei diese Vorrichtung umfaßt:
- einen Ultraschallwandler (132), der in der Dekantierungsvorrichtung (10) derart angeordnet ist, daß eine vorläufige Verringerung der Korngröße der Teilchen durchgeführt wird;
- eine Rohrleitung, die die Überführung der Teilchen durch die Schwerkraft aus der Dekantierungsvorrichtung (10) in den Transportbehälter (16) sicherstellt;
- eine geschlossene Schleife (20), die den Transportbehälter (16), Pumpvorrichtungen (24) und Vorrichtungen (26) zum Zertrennen der Agglomerate umfaßt; und
- eine Teilchen-Siebvorrichtung (30), die in der Rohrleitung (28) großer Länge in der Nähe des Transportbehälters (16) angeordnet ist.

8. Anlage gemäß Anspruch 7, **dadurch gekennzeichnet**, daß sie stromabwärts der Vorrichtungen zum Zertrennen, Auflösen und Dekantieren von bestrahlten Kernbrennstoffelementen angeordnet ist.

9. Anlage gemäß irgendeinem der Ansprüche 7 und 8, **dadurch gekennzeichnet**, daß die Vorrichtungen zum Trennen der Agglomerate eine Vorrichtung (26a) umfassen, die mindestens einen Wandler (72) umfaßt, der ein Sender von Ultraschallwellen ist.

10. Anlage gemäß irgendeinem der Ansprüche 7 und 8, **dadurch gekennzeichnet**, daß die Vorrichtungen zum Zertrennen der Agglomerate eine Vorrichtung (26b, 26c, 26d) mit einem Venturi-Rohr (167, 267, 344) umfassen.

11. Anlage gemäß Anspruch 10, **dadurch gekennzeichnet**, daß die Vorrichtung (26b, 26c, 26d) mit Venturi-Rohr stromaufwärts des Venturi-Rohrs eine Eintragsvorrichtung (165, 265, 336) umfaßt, die von dem Venturi-Rohr durch einen Rückgewinnungsdurchgang (183, 285, 276) getrennt ist.

12. Anlage gemäß irgendeinem der Ansprüche 10 und 11, **dadurch gekennzeichnet**, daß die Vorrichtung (26d) mit Venturi-Rohr stromabwärts des Venturi-Rohrs (267) ein System von Schikanen (287) umfaßt.

13. Anlage gemäß irgendeinem der Ansprüche 10 und 11, **dadurch gekennzeichnet**, daß die Vorrichtung (26c) mit Venturi-Rohr eine Ablenkvorrichtung (372) umfaßt, die an dem Ausgang des Venturi-Rohrs (344) angeordnet ist.

14. Anlage gemäß irgendeinem der Ansprüche 7 bis 13, **dadurch gekennzeichnet**, daß die Siebvorrichtung für die Teilchen (30) eine Ultraschall-Siebvorrichtung ist.

15. Anlage gemäß Anspruch 14, **dadurch gekennzeichnet**, daß die Ultraschall-Siebvorrichtung mit Strompendelung arbeitet.

16. Anlage gemäß irgendeinem der Ansprüche 7 bis 15, **dadurch gekennzeichnet**, daß die Mittel (26) zum Zertrennen der Agglomerate und die Siebvorrichtung für die Teilchen (30) einen Behälter (40, 78) umfassen, der an einer horizontalen Platte (34, 34') aufgehängt und von einer zugängigen Zone lösbar ist, die sich oberhalb dieser Platte befindet.
